Europäisches Patentamt

European Patent Office

Office européen des brevets

(19)

(11) Publication number : **0 497 683 A1**

## (12) EUROPEAN PATENT APPLICATION

(21) Application number : **92400211.6**

(22) Date of filing : **28.01.92**

(51) Int. Cl.⁵ : **G01C 3/18,** G01C 3/24

(30) Priority : **28.01.91 KR 138291**

(43) Date of publication of application :
**05.08.92 Bulletin 92/32**

(84) Designated Contracting States :
**CH DE FR GB IT LI SE**

(71) Applicant : **Bae, Young Kook**
**182 Ul-ri Dansung-myun**
**Sanchung-gun, Kyoung Nam (KR)**

(72) Inventor : **Bae, Young Kook**
**182 Ul-ri Dansung-myun**
**Sanchung-gun, Kyoung Nam (KR)**

(74) Representative : **Rodhain, Claude et al**
**Cabinet Claude Rodhain 30, rue la Boétie**
**F-75008 Paris (FR)**

(54) **Distance measuring method and apparatus.**

(57)   The present invention is a distance measuring apparatus comprising : first (1) and second (2) collimator each of which is able to select one straight, collimating line (19, 29) ; a scale rule (3) having scale marks ; a first fixing means (4) which is fixed integrally with said first collimator, and angular adjusting is possible in which the collimating line of said first collimator can be fixed with keeping any voluntary angle with a longitudinal axis (39) of said scale rule ; and a second fixing means (5) which is fixed interally with said second collimator, and the collimating line of said second collimator can be moved and fixed along the longitudinal axis with keeping a predetermined angle with the longitudinal axis of said scale rule, and the collimating line of said second collimator crosses with the collimating line of said first collimator at a target material and thereby selects a plane, and the longitudinal axis of said scale rule is disposed so as to be parallel with said plane.

FIG 1

EP 0 497 683 A1

## BACKGROUND OF THE INVENTION

### 1. FIELD OF THE INVENTION

The present invention relates to a distance measuring method and apparatus. Particularly, this invention relates to a distance measuring method and apparatus capable of measuring a straight line distance between a measuring point and a target ( or target place ) and which is constructed such that a handling is easy and a measuring can be rapidly made.

### 2. DESCRIPTION OF THE PRIOR ART

Heretofore, a distance measuring method such as a method for measuring by walk, a method for measuring one by one using a tape rule and the like, and a triangular measuring method utilizing a transit compass ( instrument ), has been utilized for a distance measuring, however, the measuring method utilizing the walking measuring and the tape rule is almost impossible for the straight line measuring, and the triangular measuring method was very inconvenient because its measuring method was complicated or a difficult operation was required.

### SUMMARY OF THE INVENTION

Therefore, an object of the present invention is to solve inconvenient points of such conventional measuring method and apparatus, and to provide a distance measuring method and apparatus that its handling is easy and an error is less and a price is cheap and so it is very useful.

The distance measuring apparatus and method for measuring a distance from a measuring point to a target ( a target material or place ) distanced far away are defined by the appended claims with a specific embodiment shown in the attached drawings.

For the purpose of summarizing the invention, the invention relates to an distance measuring apparatus for measuring a distance up to a target material (target place ) distanced away from a measuring point and which comprises: first and second collimating means each of which is able to select one straight line (collimating line), a scale rule having scale marks, a first fixing means which couples the first collimating means to the scale rule so that a collimating line of the first collimating means makes any certain angle with the scale rule, and a second fixing means which is so made that the second collimating means is moved along a longitudinal axis of the scale rule with keeping a predetermined angle and then fixed at a point on the longitudinal axis of the scale rule.

The distance measuring method for measuring a distance up to a target material (target place ) distanced away from a measuring point, comprises the steps of:

(1) setting a first straight line for connecting a measuring point and a target,

(2) setting a second straight line which makes an acute angle with said first straight line and crosses at said target,

(3) setting a basic line segment which is present on a plane made by the first straight line and the second straight line, and crosses by making a right angle with the second straight line and crosses by making a predetermined angle with the first straight line,

(4) obtaining a measured distance up to the target from the measuring point by multiplying tan B to a length of said basic line segment which is between the first and second straight line.

The step of obtaining a measured distance includes setting a measuring line which is parallel with the basic line segment which measuring line has a distance indicating scale, measuring a distance L of a segment on the measuring line corresponding to the basic line segment on said measuring line, either by converting a distance X from said measuring point to a target material by a formula

$$X = L * \tan B$$

or by reading a scale rule indicating a numerical value of a product of tan with a length L of actual scale rule.

### BRIEF DESCRIPTION OF THE DRAWINGS

For a more complete understanding of the nature and objects of the invention, reference may be had to the following detailed description taken in connection with the accompanying drawings in which:

FIG.1 is a schematic plane view for illustrating a preferred embodiment of the present invention,

FIG. 2 is a cross sectional view which is cut along B-B line of FIG. 1,

FIG. 3 is a fragmentary perspective view for illustrating a preferred embodiment of the present invention viewing from a C direction in FIG. 1,

FIG. 4 is a cross sectional view which is cut along A-A line of FIG. 1, and

FIG. 5 is a diagram for illustrating a method of the present invention.

### DETAILED DESCRIPTION OF THE PREFERRED EMBODIMENT

The constitution, operation and effects of the present invention will be described in detail referring to the attached drawings. A preferred embodiment of the present invention comprises two telescopes, one scale rule, and two coupling means for coupling the telescopes with the scale rule. The preferred embodiment of the invention is an apparatus, in which a target material is collimated by a telescope coupled to a scale rule with an acute angle, another telescope perpendicularly set with the scale rule is collimated to the same target material by moving on the scale rule, and when the target is aligned, the moving is stopped and it is fixed, and a distance L between said two telescopes at that moment is measured, and then a distance up to the target point X is converted by a formula X = L * tan B.

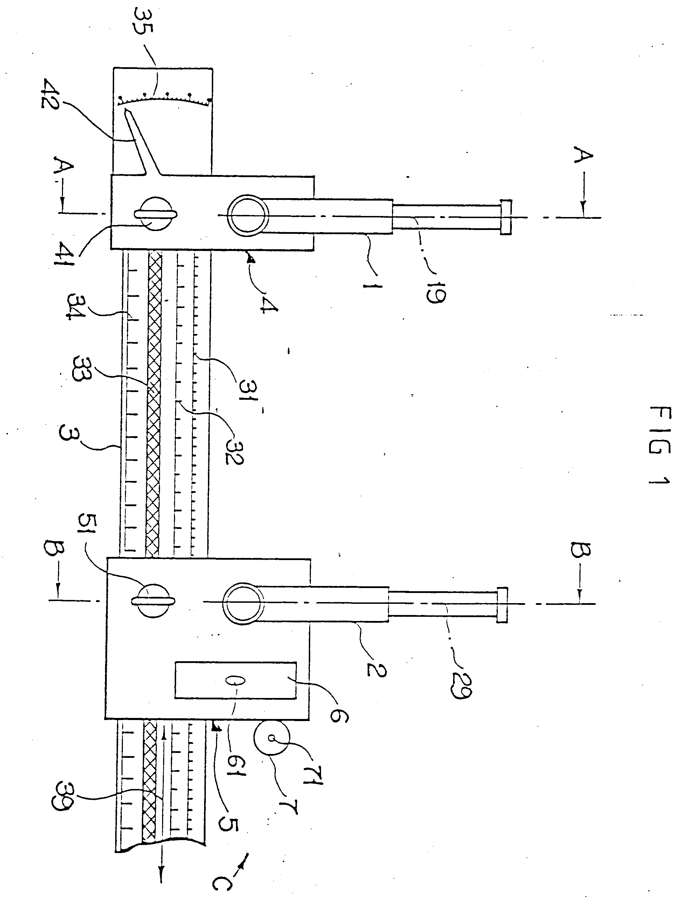

FIG. 1 is a plane view for illustrating a preferred embodiment of the present invention.

A first collimator is utilized for a first collimating means, while a second collimator is utilized for a second collimating means.

The first collimator is coupled to a first fixing means 4, while the second collimator 2 is coupled to a second collimating means 5.

A scale rule 3 has scale indicating marks, and it is made to be able to couple with the first fixing means 4 and the second fixing means 5.

The first fixing means 4 is made to be able to couple a collimating line 19 of the first collimator 1 to the scale rule 3 by a tightening screw 41 with any voluntary angle.

That is, the first fixing means 4 is made such that a first fixing body 40 can be rotated around an axis of the tightening screw by an angle within a predetermined range, and an angle made by the collimating line 19 with a longitudinal axis 39 of the scale rule can be read by an angular indicating scale mark 35 and an angular indicating needle 42.

Although this angular indicating scale mark 35 can be indicated by a radian or a degree, they may be made to indicate a predetermined angle and magnification so as to be corresponded respectively to each distance indication 31, 32, 34 of the scale rule.

The second fixing means 5 fixes the second collimator 2 and couples such that a second collimating line 29 and the longitudinal axis 39 of the scale rule are orthogonally crossed, and it is made to move along the longitudinal axis with keeping always the orthogonal state ( in this embodiment, only the orthogonal case is exemplified, but it is not necessary to be orthogonally crossed, and it is good if only a predetermined angle can be maintained ) so as to be able to be fixed to the scale rule by a tightening screw 51.

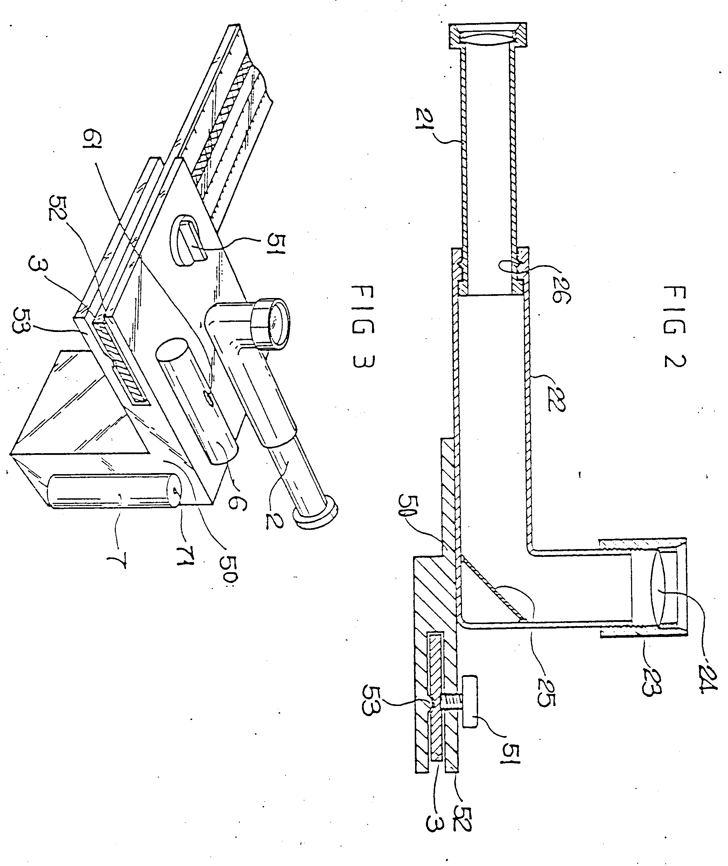

FIG. 2 is a cross sectional view of the second collimator and the second fixing means 5 taken along B-B line.

The collimator is a telescope in this embodiment. But, it may well do if it is made to be able to collimate even it is not a telescope. For example, it may well do as if it collimate for a foresight hole and a backsight as in a rifle and also it may be a long tube.

An object lens 21 is made to be pulled out and pushed in, and when it is pulled out, it is made to be fixed by a holding protrusion 26.

And, the object lens or the eye piece lens has a mark as " ↑ " or " + " for the collimation.

Since this distance measuring apparatus is set on a measuring flat board or on a tripod, the collimator (telescope) is made with a " L " shape for an operator to be convenient to collimate a remote target material. A collimator body 22 is provided with a reflector 25 for changing a light beam course, and an eye piece lens 24 is assembled with the collimator body 22 by a focus adjusting means 23.

The collimator body 22 is coupled to the second fixing means 5. The second fixing means 5 is constructed such that " U " - shaped second fixing body 50 surrounds from both sides of the scale rule and a convex portion 53 is coupled to be slidably fit to a concave portion of the scale rule so as to be moved along the longitudinal axis of the scale rule 3, and has also a tightening screw 51 for fixing it.

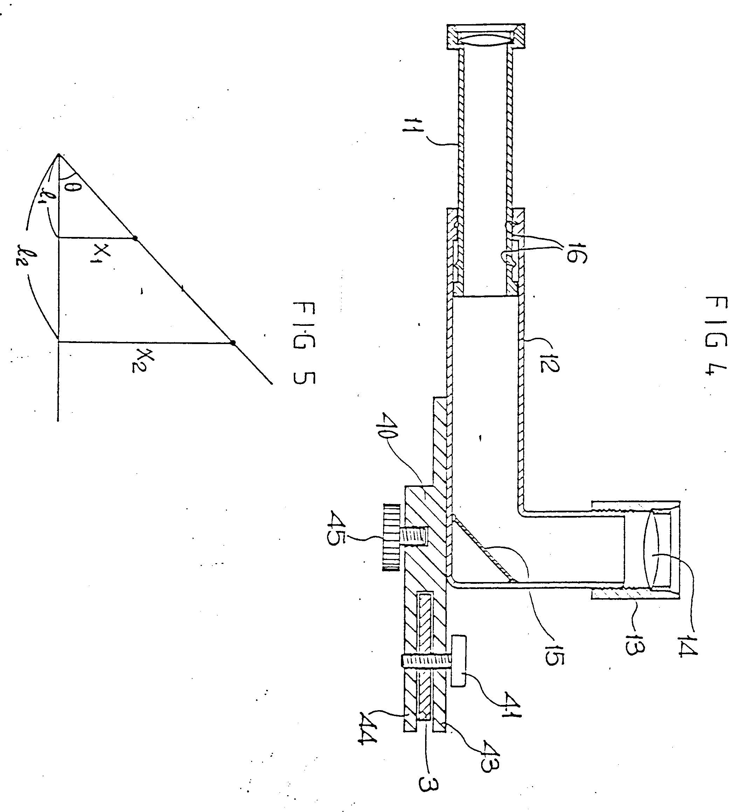

The second fixing means 5 is made to be able to have an air bubble 6 within a level for making the second collimating line as shown in FIG. 3 to be set in horizontal and to have another air bubble 7 which is in a vertical relation with this, and these are provided according to the requirement for making to be able to use even at a measuring flat board which is not provided with a horizontal or vertical level setting device.

FIG.4 is a cross sectional view for illustrating a relation of a coupling of the first collimator and the first fixing means with the scale rule.

An object lens tube 11 has a holding protrusion 16 at a coupling portion with a collimator body 12 of the second collimator, and it is made to be able to push in when not in use.

An eye piece lens 14, a focus adjusting means 13, a collimator body 12 and the like have same structure as the second collimator. The collimator body 12 is attached to a first fixing body 40 of the first fixing means 4.

The first fixing means 4 is coupled to the scale rule 3 around an axis of a tightening screw 41, and which is adjustable so as to make the collimating line 19 of the first collimator 1 and the longitudinal axis 39 of the scale rule 3 are to be crossed with a predetermined angle, and fixed by the tightening screw 41 with a predetermined angle.

Unexplained reference numeral 45 is a screw for coupling with a measuring flat board such as a tripod, and which is a screw for using when coupling a tripod or other supporting means to this apparatus.

Although this screw is not shown, it can be provided also to the second fixing means.

FIG. 5 is a diagram for illustrating a distance measuring method of this apparatus.

In a triangle, when an angle and a length L ($L_1$ or $L_2$) are known, an unknown length X can be obtained by a formula

$$X = L * \tan B$$

The distance measuring method utilizing this distance measuring apparatus and an operation of this apparatus will be described hereinafter.

For instance, when it is assumed that both of the collimating lines of the first and second collimator are set by aligning to the target distanced 100 m away from the measuring point, and a length of a basic line segment between two points that each collimating lines cross the longitudinal axis of the scale rule is read as 10 mm, in case when the first collimating line is fixed with a predetermined angle as it is and only the second fixing means is moved so that both of the collimation of two collimating lines are aligned to an unknown target, and when the length of the basic line segment read on the scale rule at that moment is 10 cm, a length(distance) between the measuring point and the target becomes 10 cm · 100000/10 = 1 km.

This apparatus is made such that a relation between a coupling angle 35 of the collimating line and a magnification is precisely measured and indicated it to the scale rule, during a calibrating process and when a range matching to a measuring distance is selected at a cite and the two collimating lines are aligned to a target by moving the second collimator, a distance: can be easily measured.

When explaining more exactly the principle for measuring a distance by this distance measuring apparatus, it will be as follows.

When the first collimating line and the second collimating line are crossed at a target, a plane including these two straight lines is defined.

The scale rule is disposed such that a plane including this plane and the longitudinal axis of the scale rule is made to be parallel.

A straight line being parallel with the longitudinal axis of the scale rule is present in a plane including two collimating lines, and a line segment between the points crossing this straight line with two collimating lines is present.

A length of this line segment is measured on the longitudinal axis. That is, the length of this line segment is measured by making this longitudinal axis to be parallel to this line segment.

When second collimating line is perpendicular against the longitudinal axis and the first collimating line is crossed with an angle of , a distance X to be actually measured is given by a product of the length L of the line segment and tan B.

When an air bubble within a level provided at the second fixing means is utilized, a height of the target viewed from a horizontal plane of the measuring point can be measured.

When this method is explained as an example, a distance X up to a certain target is measured and then a horizontal state is made by utilizing two air bubbles within each level and thereafter, when the first collimating line is aligned to the target, it is possible to know an angle B' made by a horizontal plane and a straight line from the measuring point up to the target.

A height h can be obtained simply by X sin B'.

The present invention is not limited only to the embodiment although it is clear as described at above also. The indication of the angle can be made in various way, and the fixing means, the structure of the scale rule and the like can be applied by changing as much as one desires.

By utilizing a method and apparatus of the present invention as described above, not only a straight distance can be exactly measured in a distance measuring, but also many effects such as a decreasing of cost, a decreasing of an operating time, and an easiness of the handling can be obtained.

The present disclosure includes that contained in the appended claims as well as that of the foregoing description. Although this invention has been described in its preferred form with a certain degree of particularity, it is understood that the present disclosure of the preferred form has been made only by way of example and that numerous changes in the details of construction and the combination and arrangement of parts may be resorted to without departing from the spirit and scope of the invention.

## Claims

1. A distance measuring apparatus for measuring a straight distance up to a target place distanced away from a measuring point, comprising:
   first collimating means for selecting first collimating line;
   second collimating means for selecting second collimating line;
   a scale rule having scale marks ;
   a first fixing means for coupling said first collimating means to said scale rule so that said first collimating line makes any angle with the scale rule; and
   a second fixing means for coupling said second collimating means to said scale rule so that said second collimating means is moved along a longitudinal axis of the scale rule with keeping a predetermined angle between said second collimating line and a longitudinal axis of the scale rule and fixed with keeping the predetermined angle.

2. A distance measuring apparatus as claimed in claim 1, wherein said first and second collimating means are telescopes each having an object lens, an eye piece lens, a focus adjusting means, and telescope body which combines said object lens, said eye piece lens, and said focus adjusting means.

3. A distance measuring apparatus as claimed in claim 2, wherein said object lens and the eye piece lens have respectively a collimation indicating marks.

**4.** A distance measuring apparatus as claimed in claim 1, wherein said first and second collimating means are collimator comprising an object lens, an eye piece lens, a focus adjusting means, a reflecting mirror, and collimator body and which is made so as to be able to collimate a target from a top direction of this collimator.

**5.** A distance measuring apparatus as claimed in claim 1, wherein an angle made by said second collimating line and a longitudinal axis of said scale rule is a right angle.

**6.** A distance measuring apparatus as claimed in claim 1, wherein said first and/or second fixing means are respectively provided with a tripod capable of rotating in horizontal and vertical directions.

**7.** A distance measuring apparatus as claimed in claim 1, wherein a first air bubble is attached to said first fixing means or second fixing means within a level in parallel with a first collimating line and said second collimating line, and a second air bubble is attached within a level which is perpendicular to a plane determined by said first air bubble.

**8.** A distance measuring apparatus as claimed in claim 1, wherein said first fixing means comprises:

a first fixing body 40 shaped "U" type, to which said first collimator is attached and which surrounds both side of said scale rule, and

a locking screw 41 for fixing said fist fixing body to said scale rule, and

said second fixing means comprises:

a second fixing body 50 shaped "U" type, to which said second collimator is attached and which surrounds both side of said scale rule,

a locking screw 51 for fixing said second fixing body to said scale rule,

a sliding guide formed with a convex portion 53 coupled to be slidably fit to a concave portion of the scale rule so as to be moved along the longitudinal axis of the scale rule 3.

**9.** A distance measuring apparatus as claimed in claims 1, 2, 3, 4, 5, 6, 7, of 8, wherein said scale rule has an angular indicating means for indicating an angle made by said first collimating line with a longitudinal axis of the scale rule, and has a distance indicating scale marks for indicating a distance for each angle.

**10.** A method for measuring a distance up to a target distanced away from a measuring point, comprising the steps of:

(1) setting a first straight line for connecting a measuring point and a target material;
(2) setting a second straight line which makes a predetermined angle with said first straight line and crosses at said target material;
(3) setting a basic line segment which connects said measuring point and said second straight line, makes a right angle with said second straight line, and crosses by making a predetermined angle with said first straight line;
(4) obtaining a measured distance up to the target material from the measuring point by multiplying tan to a length of said basic line segment.

**11.** A method as claimed in claim 10, said step (4) further includes the steps of:

setting a measuring line segment on said scale rule which is parallel with the basic line segment and has a the same length of the basic line segment;

measuring a length L of the basic line segment on the scale rule;

obtaining a measured distance X up to the target material from said measuring point by either calculating a formula of $X = L * \tan B$, or reading out a scale mark of the scale rule which indicates a numerical value of a product of tan B with a length L of actual scale rule.

FIG 1

FIG 2

FIG 3

FIG 4.

FIG 5

European Patent
Office

**EUROPEAN SEARCH REPORT**

Application Number

EP    92 40 0211

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-148 306 (FAGET)  * page 1, line 75 - page 2, line 39; figures 1-3 * | 1-3,5-7, 10,11 | G01C3/18 G01C3/24 |
| X | FR-A-413 316 (GILQUIN) | 1-3,5,6, 9-11 | |
| A | * the whole document * | 7 | |
| X | FR-A-444 683 (KRIPPSTÄDT)  * the whole document * | 1-3,5, 9-11 | |

TECHNICAL FIELDS
SEARCHED (Int. Cl.5 )

G01C

The present search report has been drawn up for all claims

| Place of search | Date of completion of the search | Examiner |
|---|---|---|
| THE HAGUE | 09 APRIL 1992 | HOEKSTRA F. R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)